# EUROPÄISCHE PATENTANMELDUNG

(11) **EP 1 441 144 A2**
(43) Veröffentlichungstag der Anmeldung: **28.07.2004**
(21) Anmeldenummer: 03027558.0
(22) Anmeldetag: 01.12.2003
(51) Int. Cl.: F16F 1/14

(54) **Torsions- oder Biegefeder aus Einzelstäben**

(30) Priorität: 02.12.2002 DE 10256402
(71) Anmelder: Muhr und Bender KG, 57439 Attendorn (DE)
(72) Erfinder: Kobelev, Vladimir, Dr., 57439 Attendorn (DE)
(74) Vertreter: Neumann, Ernst Dieter, Dipl.-Ing.

(57) **Zusammenfassung**

Feder 11, 21, 31... mit konstanter Querschnittsfläche für Torsions- und/oder Biegebeanspruchung, bestehend aus einer Mehrzahl von einzelnen Stäben 12, 22, 32... mit untereinander gleichem und über der Länge unverändertem rundem oder polygonalem Querschnitt, die mit jeweils zumindest zwei anderen Stäben 11, 21, 31... Linien- oder Flächenkontakt haben und ein jeweils zumindest an den Enden zusammengehaltenes Stabbündel bilden, wobei die Stäbe im Querschnitt rund, hexagonal oder gleichschenklig dreieckig sind und die Zahl der Stäbe 3n oder 3n+1 beträgt, wobei n eine natürliche Zahl größer oder gleich 3 ist.

## Beschreibung

Die Erfindung betrifft eine Feder mit gleichmäßiger Querschnittsfläche für Torsions- und/der Biegebeanspruchung, insbesondere für Anwendungen im Bereich der Motoren- und Kraftfahrzeugtechnik.

Drehstabfedern haben im Vergleich mit Bügelfedern oder Spiralfedern eine außerordentlich hohe Drehsteifigkeit im Verhältnis zum eingesetzten Material, die nicht in allen Einsatzfällen günstig ist. Um große Federwege für gegebene maximale Spannungen aufnehmen zu können, werden dadurch große Drehstablängen erforderlich. Dies ist häufig durch die Einbauverhältnisse begrenzt, darüber hinaus in jedem Fall durch die Knickgrenze, die bei Drehstabfedern zu berücksichtigen ist.

In "Berechnung und Gestaltung von Metallfedern", Siegfried Gross, Springer-Verlag 1960, wird auf Seite 94 angegeben, daß geschichtete Drehstabfedern für größere Drehwinkel bei einem gegebenen Moment bekannt sind, die aus einem Bündel von Flachstäben gleicher Länge, Breite und Höhe bestehen, bei denen die Enden des Bündels in Köpfen, deren Ausnehmung dem Querschnitt des Bündels entspricht, festeingespannt sind. Aus der japanischen Patentveröffentlichung 02236032 A ist eine Drehstabfeder bekannt, bei der einzelne runde Stäbe parallel mit Abstand zueinander in Köpfen eingespannt sind, die gegeneinander verdrehbar sind. Für die Stäbe werden hierbei Memory-Legierungen eingesetzt, die bei Torsion plastisch verformbar sind und sich bei anschließender Erwärmung erholen und zurückverformen.

Aus der DE 39 12 944 A1 ist eine Riemenspannvorrichtung bekannt, bei der eine Torsionsfeder aus einzelnen Drehstäben zwischen einer Einspannstelle und einem Spannhebel für eine Spannrolle wirksam ist, die aus drei Sechskantstäben oder aus vier Vierkantstäben aufgebaut sein soll. Die Drehstäbe sind in einem Führungsrohr angeordnet, um eine Biegung der Drehstäbe bei Belastung zu verhindern und um eine Veränderung der Reibungswerte an den Kontaktflächen zwischen den einzelnen Drehstäben zu verhindern.

Aus der DE 1 856 795 U1 ist ein Drehstabfederbündel bekannt, das aus insbesondere vier runden Einzelstäben besteht, deren Enden einen gemeinsamen polygonen Einspannkopf bilden. Die Einzelstäbe sind im Bereich der Einspannköpfe mit Hartlot verbunden.

Aus der US 2,778,626 ist eine Torsionsfederanordnung bekannt, bei der eine Gruppe aus sechs ringförmig angeordneten Einzelfedern mit hexagonalem Querschnitt an den Enden in Buchsen eingespannt ist, die relativ zueinander drehbar gelagert sind.

Der vorliegenden Erfindung liegt die Aufgabe zugrunde, Federn aus einem Bündel von einzelnen Stäben vorzuschlagen, die leicht an verschiedene Anwendungsfälle anpaßbar sind und die gegenüber bekannten Federn neue und weitgehend frei beeinflußbare Dämpfungseigenschaften aufweisen. Die Lösung hierfür besteht in einer Feder mit konstanter Querschnittsfläche für Torsions- und/oder Biegebeanspruchung, bestehend aus einer Mehrzahl von einzelnen Stäben mit untereinander gleichem und über der Länge unverändertem rundem oder polygonalem Querschnitt, die mit jeweils anderen Stäben Linien- oder Flächenkontakt haben und ein jeweils zumindest an den Enden zusammengehaltenes Bündel bilden, wobei
die Stäbe im Querschnitt rund, hexagonal oder gleichschenklig dreieckig sind und
die Zahl der Stäbe 3n oder 3n+1 beträgt, wobei n eine natürliche Zahl größer oder gleich 3 ist, oder
die Stäbe im Querschnitt oktogonal oder quadratisch sind und die Zahl der Stäbe 4n oder 4n+1 beträgt, wobei n eine natürliche Zahl größer oder gleich 2 ist.
Hierbei ist insbesondere vorgesehen, daß bei einer Zahl der Stäbe von 3n oder 4n im Zentrum des Stabbündels mehrere Stäbe zusammenkommen und
daß bei einer Zahl der Stäbe von 3n+1 oder 4n+1 im Zentrum des Stabbündels ein zentraler Einzelstab liegt.

Durch die Verwendung untereinander gleicher Einzelelemente, die in Anschlußelementen gehalten sind, wobei die Einzelelemente in großer oder größtmöglicher Pakkungsdichte liegen, bilden sich eine Vielzahl von Kontaktlinien oder Kontaktflächen zwischen den einzelnen Stäben, durch die bei einer Verformung der Feder, insbesondere bei Torsion, große Reibungseffekte erzielt werden. Die Federn weisen damit eine starke Dämpfung auf.

Weiterhin wird durch die Verwendung von untereinander gleichen Einzelelementen die Anpassung an die unterschiedlichsten Einsatzfälle möglich, indem einerseits bei Verwendung untereinander gleicher Anschlußelemente Stäbe mit unterschiedlichen Längen zum Einsatz kommen können, wenn die Verhältnisse dies erfordern oder zulassen, und zum anderen der Aufbau von Federn mit unterschiedlicher Anzahl von Stäben leicht möglich wird, um austauschbare untereinander im wesentlichen baugleiche Federn mit unterschiedlicher Federrate darstellen zu können. Hierbei ist es z. B. möglich, in Anschlußelementen mit fest vorgegebenem Aufnahmequerschnitt wahlweise Platzhalterelemente, die die Ausnehmung in Ergänzung zum Federbündel ausfüllen und echte Federstäbe ersetzen, einzusetzen. In einem der Anschlußelemente können dabei die außen eingesetzten Platzhalterelemente gleichzeitig zum Verkeilen der Stäbe in der Ausnehmung dienen.

Üblicherweise wird die Mittellinie des Federkörpers gerade sein und mit der Längsachse der Feder zusammenfallen. Der Begriff 'Federkörper' bedeutet in diesem Zusammenhang die Feder mit Ausnahme der Anschlußteile als ganzes und ist damit in den meisten Fällen gleichbedeutend mit dem Begriff des 'Stabbündels'.

Die einzelnen Stäbe können runden Querschnitt haben. Damit können sie aus gezogenem Draht abgelängt werden, wobei eine anschließende Oberflächenbehandlung im Hinblick auf die gute Oberflächenqualität hierbei entfallen kann. Die einzelnen Stäbe können jedoch auch im Querschnitt polygonförmig sein, wodurch sich anstelle eines Linienkontakts zwischen den einzelnen Stäben ein Flächenkontakt zwischen den einzelnen Stäben herstellen läßt. Dies hat erheblichen Einfluß auf die Reibung zwischen den Elementen und damit auf die Dämpfung der Feder als ganzes. Auch solche Stäbe können aus gezogenem Draht hergestellt werden.

Das Bündel aus Stäben als ganzes hat seinerseits vorzugsweise im wesentlichen runden oder im wesentlichen symmetrischen, insbesondere polygonalen Querschnitt.

Mit der vorliegenden Erfindung ist eine neuartige Art von Federn vorgeschlagen worden, die vielfältig zu variieren ist und zu neuartigen Anwendungsfällen der derartigen Federn führen kann.

Beispiele für die Anwendung sind Ventilfedern in Verbrennungsmotoren, Federn oder Stabilisatoren im Fahrwerksbereich und Schließfedern für Türen oder Hauben von Kraftfahrzeugen.

Bevorzugte Ausführungsbeispiele der Erfindung sind in den Zeichnungen dargestellt und werden nachstehend anhand dieser beschrieben.
Figur 1 zeigt eine erfindungsgemäße Feder mit parallel verlaufenden Stäben;
Figur 2 zeigt eine Feder nach Figur 1 mit Anschlußelementen
   a) in perspektivischer Ansicht
   b) in einer vergrößerten Einzelheit;
Figur 3 zeigt verschiedene Federquerschnitte aus einem Bündel von runden Stäben im Querschnitt
   a) im Querschnitt in hexagonaler Anordnung
   b) im Querschnitt in abgestumpft dreieckiger Anordnung
   c) im Querschnitt in dreieckiger Anordnung
   d) im Querschnitt in abgestumpft hexagonaler Anordnung;
Figur 4 zeigt verschiedene Federquerschnitte mit einem aus einem Bündel von hexagonalen Stäben
   a) im Querschnitt in hexagonaler Anordnung
   b) im Querschnitt in abgestumpft dreieckiger Anordnung
   c) im Querschnitt in dreieckiger Anordnung
   d) im Querschnitt in abgestumpft hexagonaler Anordnung;
Figur 5 zeigt verschieden Federquerschnitte aus einem Bündel von Stäben
   a) in im Querschnitt quadratischer Anordnung aus Stäben mit quadratischem Querschnitt
   b) in im Querschnitt quadratischer Anordnung aus Stäben mit rundem Querschnitt
   c) in im Querschnitt hexagonaler Anordnung aus im Querschnitt dreieckigen Stäben
   d) in im Querschnitt abgestumpft dreieckiger Anordnung aus im Querschnitt dreieckigen Stäben
   e) in im Querschnitt quadratischer Anordnung aus im Querschnitt oktogonalen Stäben
   f) in im Querschnitt quadratischer Anordnung aus im Querschnitt oktogonalen Stäben mit Zwischenelementen.

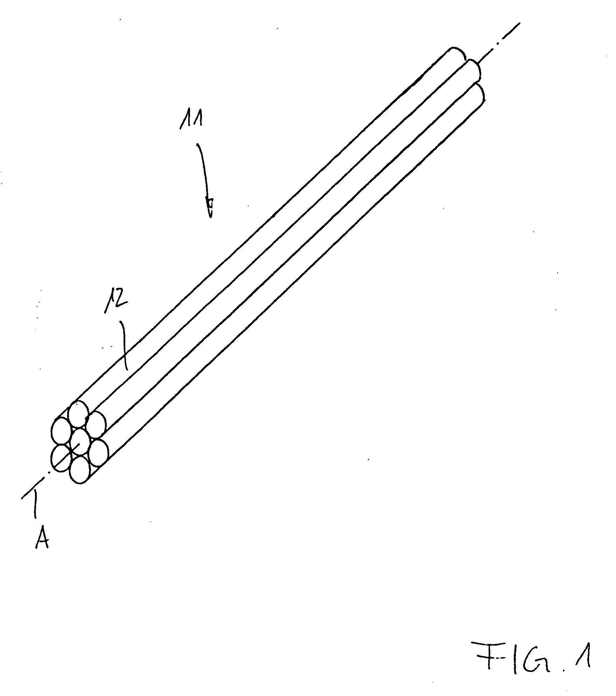

In Figur 1 ist eine erfindungsgemäße Drehstabfeder 11 gezeigt, die aus sieben einzelnen Stäben 12 zusammengesetzt ist, die in größtmöglicher Packungsdichte mit Oberflächenkontakt aneinanderliegen. Die Längsachse A der Feder ist zugleich geometrische Mittellinie des aus den Stäben 12 bestehenden Federkörpers bzw. Bündels von Stäben. Eine Feder der hier gezeigten Art wird bevorzugt als Torsionsdrehstabfeder verwendet werden; eine Verwendung auch oder zugleich als Biegefeder ist jedoch nicht ausgeschlossen. Bei jeder Formänderung des Federkörpers tritt Oberflächenreibung zwischen den einzelnen Stäben 12 auf, so daß zur inneren Dämpfung im Federstahl eine zusätzliche Dämpfung aufgrund Oberflächenreibung hinzutritt.

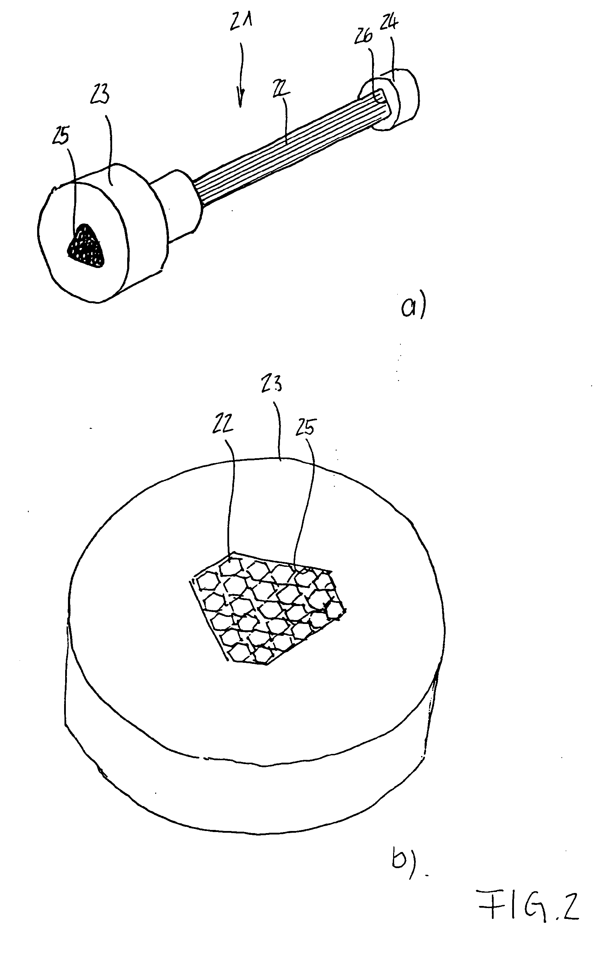

In Figur 2 ist eine Feder 21, die aus einem Bündel einzelner Stäbe 22 aufgebaut ist, mit zwei Anschlußstücken 23, 24 gezeigt. Die Anschlußstücke 23, 24 haben Zentralöffnungen als Aufnahmen 25, 26, in die das Bündel aus Federstäben 22 eingesteckt ist. Hierbei können beispielsweise die einzelnen Stäbe 22 untereinander und mit der Öffnung 26 im Anschlußelement 24 verschweißt sein und in der Öffnung 25 gegeneinander und relativ zum Anschlußstück 23 geringfügig axial verschiebbar sein.

Wie in Darstellung b besser zu erkennen ist, sind die einzelnen Stäbe 22 hierbei im Querschnitt hexagonal und die Öffnung 25 abgestumpft dreieckig. Hierbei ist die größtmögliche Packungsdichte der Stäbe 22 anzunehmen; die hier dargestellten Spalten zwischen den einzelnen Stäben sind übertrieben und nur zu Verdeutlichung dargestellt.

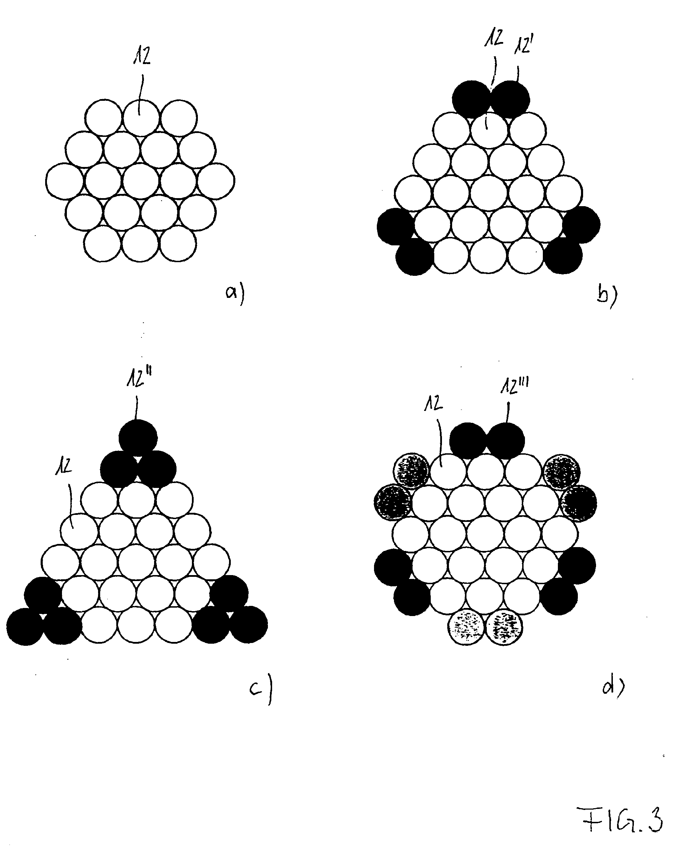

Figur 3 zeigt Querschnitte durch Stabbündel aus im Querschnitt runden Stäben, die in größtmöglicher Packungsdichte auf einer gegebenen Grundform angeordnet sind.

In Darstellung a sind neunzehn Stäbe 12 in einem hexagonalen Querschnitt angeordnet.

In Darstellung b sind die neunzehn Stäbe 12 in der Anordnung nach a durch sechs dunkel angelegte Stäbe 12' ergänzt und bilden hiernach ein Dreieck mit abgestumpften Ecken.

In Darstellung c sind die neunzehn Stäbe 12 in der Anordnung nach a durch neun Stäbe, bzw. die fünfundzwanzig Stäbe in der Anordnung nach b durch drei weitere Stäbe 12" ergänzt, so daß sie ein Bündel von 28 Stäben auf dreieckiger Grundfläche bilden.

In Darstellung d sind die neunzehn Stäbe in der Anordnung nach a durch zwölf Stäbe 12''' ergänzt, so daß sie im Querschnitt ein Sechseck mit abgestumpften Ecken bilden. Die Gesamtzahl der Stäbe ist hierbei 31.

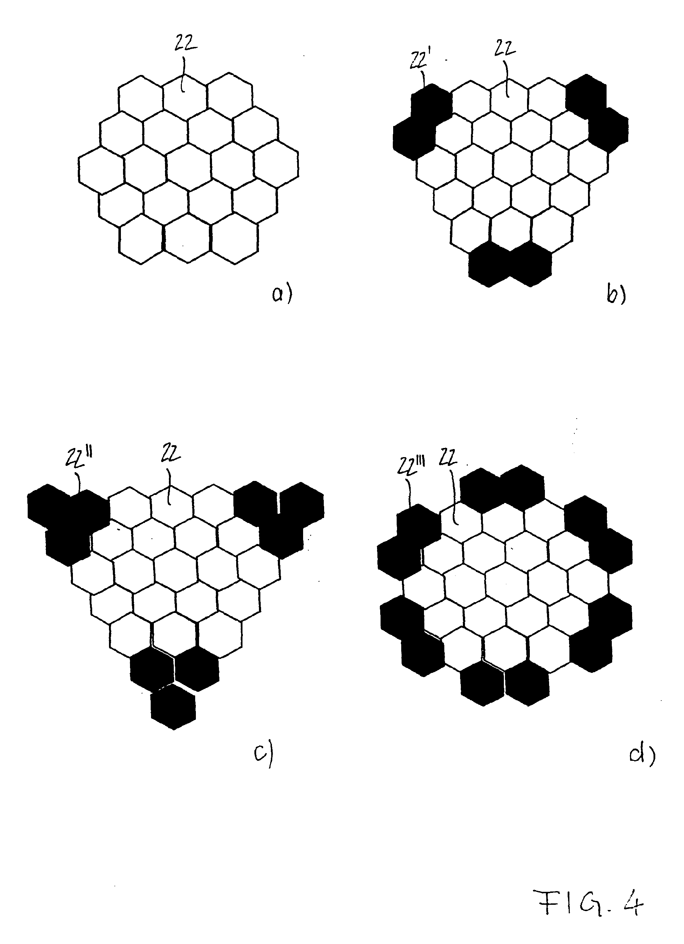

Figur 4 zeigt Querschnitte durch Stabbündel aus im Querschnitt hexagonalen Stäben, die in größtmöglicher Packungsdichte auf einer gegebenen Grundform angeordnet sind.

In Darstellung a sind neunzehn Stäbe 22 in einem hexagonalen Querschnitt angeordnet.

In Darstellung b sind die neunzehn Stäbe 22 in der Anordnung nach a durch sechs dunkel angelegte Stäbe 22' ergänzt und bilden hiernach ein Dreieck mit abgestumpften Ecken.

In Darstellung c sind die neunzehn Stäbe 22 in der Anordnung nach a durch neun Stäbe, bzw. die fünfundzwanzig Stäbe in der Anordnung nach b durch drei weitere Stäbe 22" ergänzt, so daß sie ein Bündel von 28 Stäben auf dreieckiger Grundfläche bilden.

In Darstellung d sind die neunzehn Stäbe in der Anordnung nach a durch zwölf Stäbe 22''' ergänzt, so daß sie im Querschnitt ein Sechseck mit abgestumpften Ecken bilden. Die Gesamtzahl der Stäbe ist hierbei 31.

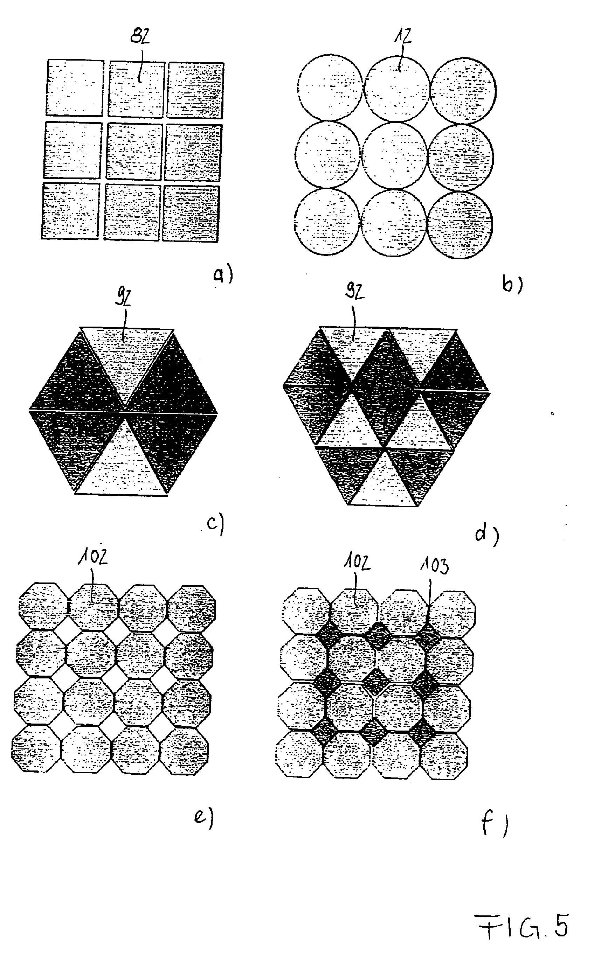

In Figur 5 sind verschiedene andere Querschnitte durch Federn mit weiteren Formen von Stabquerschnitten gezeigt. Es zeigen
a) eine quadratische Anordnung von neun im Querschnitt quadratischen Stäben 82
b) eine quadratische Anordnung von neun im Querschnitt runden Stäben 12
c) eine sechseckige Anordnung von sechs Stäben 92 mit Dreiecksquerschnitt
d) eine dreieckige Anordnung mit stumpfen Spitzen aus dreizehn Stäben 92 mit Dreiecksquerschnitt
e) eine quadratische Anordnung aus sechzehn Stäben 102 mit oktogonalem Querschnitt
f) die Anordnung aus sechzehn Stäben 102 mit oktogonalem Querschnitt gemäß Darstellung e, wobei neun Füllkörper 103 eingesetzt sind, die aus gleichem oder anderem Material als die Stäbe 102 bestehen können, insbesondere aus Dämpfungsmasse, die an die freien nicht aneinander anliegenden Oberflächen der Stäbe 102 gegebenenfalls anvulkanisiert sein können. Dies erhöht die Dämpfung.

## Patentansprüche

1. Feder (11, 21, 31, ...) mit konstanter Querschnittsfläche für Torsions- und/oder Biegebeanspruchung, bestehend aus einer Mehrzahl von einzelnen Stäben (12, 22, 32, ...) mit untereinander gleichem und über der Länge unverändertem rundem oder polygonalem Querschnitt, die mit jeweils zumindest zwei anderen Stäben (11, 21, 31, ...) Linien- oder Flächenkontakt haben und ein jeweils zumindest an den Enden zusammengehaltenes Stabbündel bilden,
**dadurch gekennzeichnet,**
**daß** die Stäbe im Querschnitt rund, hexagonal oder gleichschenklig dreieckig sind und
**daß** die Zahl der Stäbe 3n oder 3n+1 beträgt, wobei n eine natürliche Zahl größer oder gleich 3 ist.

2. Feder (11, 21, 31, ...) mit konstanter Querschnittsfläche für Torsions- und/oder Biegebeanspruchung, bestehend aus einer Mehrzahl von einzelnen Stäben (12, 22, 32, ...) mit untereinander gleichem und über der Länge unverändertem rundem oder polygonalem Querschnitt, die mit jeweils zumindest zwei anderen Stäben (11, 21, 31, ...) Linien- oder Flächenkontakt haben und ein jeweils zumindest an den Enden zusammengehaltenes Stab-Bündel bilden,
**dadurch gekennzeichnet,**
**daß** die Stäbe im Querschnitt oktogonal oder quadratisch sind und daß die Zahl der Stäbe 4n oder 4n+1 beträgt, wobei n eine natürliche Zahl größer oder gleich 2 ist.

3. Feder nach einem der Ansprüche 1 oder 2,
**dadurch gekennzeichnet,**
**daß** bei einer Zahl der Stäbe von 3n oder 4n im Zentrum des Stabbündels mehrere Stäbe zusammenkommen.

4. Feder nach einem der Ansprüche 1 oder 2,
**dadurch gekennzeichnet,**
**daß** bei einer Zahl der Stäbe von 3n+1 oder 4n+1 im Zentrum des Stabbündels ein zentraler Einzelstab liegt.

5. Feder nach einem der Ansprüche 1 bis 4,
**dadurch gekennzeichnet,**
**daß** das Stabbündel im Querschnitt im wesentlichen rund ist.

6. Feder nach einem der Ansprüche 1 bis 4,
**dadurch gekennzeichnet,**
**daß** das Stabbündel im Querschnitt im wesentlichen zentral-symmetrisch, insbesondere polygonal ist.

7. Feder nach einem der Ansprüche 1 bis 6,
**dadurch gekennzeichnet,**
**daß** die Anzahl der Stäbe 19, 25, 28 oder 31 beträgt, und diese insbesondere im Querschnitt rund oder hexagonal sind.

8. Feder nach einem der Ansprüche 1 bis 6,
daß die Anzahl der Stäbe 9 oder 16 beträgt und diese insbesondere im Querschnitt quadratisch oder oktogonal sind.

9. Feder nach einem der Ansprüche 1 bis 8,
**dadurch gekennzeichnet,**
**daß** die Oberflächen der Stäbe (12, 22, 32, ...) poliert sind oder mit einer reibungsarmen Beschichtung versehen sind.

10. Feder nach einem der Ansprüche 1 bis 9,
**dadurch gekennzeichnet,**
**daß** die Stäbe eines Stabbündels in einem Matrixkörper vergossen sind, der eine Bewegung der einzelnen Stäbe gegeneinander im Matrixkörper zuläßt.

11. Feder nach einem der Ansprüche 1 bis 10,
**dadurch gekennzeichnet,**
**daß** die Stäbe (22) an den Enden der Feder (21) in querschnittskonstanten Einspannungen (23, 24) gehalten sind.

12. Feder nach einem der Ansprüche 1 bis 11,
**dadurch gekennzeichnet,**
**daß** die Stäbe (12, 22, 32, ...) an einem Ende axial gegeneinander fixiert, insbesondere miteinander verschweißt und am anderen Ende axial gegeneinander verschiebbar sind.

13. Feder nach einem der Ansprüche 1 bis 12,
**dadurch gekennzeichnet,**
**daß** die Stäbe (22) an beiden Enden innerhalb der Einspannungen (23, 24) gegeneinander verschiebbar sind.

14. Feder nach einem der Ansprüche 1 bis 13,
**dadurch gekennzeichnet,**
**daß** die Stäbe aus gezogenem Draht abgelängt sind.
